# EUROPÄISCHE PATENTSCHRIFT

(11) **EP 2 310 717 B1**
(45) Veröffentlichungstag und Bekanntmachung des Hinweises auf die Patenterteilung: **04.04.2012**
(21) Anmeldenummer: 09776668.7
(22) Anmeldetag: 30.05.2009
(51) Int. Cl.: F16H 61/14, F16H 61/48, F16H 63/50

(54) **VERFAHREN ZUM BETRIEB EINES DREHMOMENTÜBERTRAGUNGSSYSTEMS UND DREHMOMENTÜBERTRAGUNGSSYSTEM**
METHOD FOR OPERATING A TORQUE-TRANSMITTING SYSTEM AND TORQUE-TRANSMITTING SYSTEM
PROCÉDÉ DE FONCTIONNEMENT D UN SYSTÈME DE TRANSMISSION DE COUPLE ET SYSTÈME DE TRANSMISSION DE COUPLE

(30) Priorität: 09.07.2008 DE 102008032304
(43) Veröffentlichungstag der Anmeldung: 20.04.2011
(73) Patentinhaber: Volkswagen Aktiengesellschaft, 38436 Wolfsburg (DE)
(72) Erfinder: RIELING, Jörg, 38126 Braunschweig (DE); WACHSMUTH, Guido, 10589 Berlin (DE); KÖNIG, Dennis, 10711 Berlin (DE)
(86) Internationale Anmeldenummer: PCT/EP2009/003900
(87) Internationale Veröffentlichungsnummer: WO 2010/003486

(56) Entgegenhaltungen:
- DE-A1- 10 360 587
- DE-A1- 19 504 935

## Beschreibung

### Gebiet der Erfindung

Die Erfindung betrifft ein Verfahren zum Betrieb eines Drehmomentübertragungssystems,
- das eingangsseitig mit einer Abtriebswelle eines Antriebsaggregates und ausgangsseitig mit einer Eingangswelle einer Getriebeanordnung gekoppelt ist, sodass ein Momentenfluss von dem Antriebsaggregat zu der Getriebeanordnung über das Drehmomentübertragungssystem verläuft, und
- das umfasst:
   - einen hydrodynamischen Drehmomentwandler, über den ein hydraulischer Pfad des Momentenflusses verläuft,
   - eine funktional parallel zu dem Drehmomentwandler angeordnete Überbrückungskupplung, über die ein mechanischer Pfad des Momentenflusses verläuft, und
   - eine Steuereinheit, die eine Verteilung des Momentenflusses auf den hydraulischen und den mechanischen Pfad derart steuert, dass sich an der Eingangswelle der Getriebeanordnung ein vorbestimmter Gesamtmomentenverlauf einstellt,
mit dem folgenden, mittels der Steuereinheit durchgeführten Verfahrensschritt:
- Ermitteln des aktuell von der Überbrückungskupplung (18) übertragenen Momentes (124).

Die Erfindung betrifft weiter ein Drehmomentübertragungssystem,
- das eingangsseitig mit einer Abtriebswelle eines Antriebsaggregates und ausgangsseitig mit einer Eingangswelle einer Getriebeanordnung gekoppelt ist, sodass ein Momentenfluss von dem Antriebsaggregat zu der Getriebeanordnung über das Drehmomentübertragungssystem verläuft, und
- das umfasst:
- einen hydrodynamischen Drehmomentwandler, über den ein hydraulischer Pfad des Momentenflusses verläuft,
- eine funktional parallel zu dem Drehmomentwandler angeordnete Überbrückungskupplung, über die ein mechanischer Pfad des Momentenflusses verläuft, und
- eine Steuereinheit, eine Verteilung des Momentenflusses auf den hydraulischen und den mechanischen Pfad derart steuert, dass sich an der Eingangswelle der Getriebeanordnung ein vorbestimmter Gesamtmomentenverlauf einstellt.
wobei die Steuereinheit das aktuell von der Überbrückungskupplung übertragenes Moment ermittelt.

### Stand der Technik

Derartige Verfahren und Vorrichtungen sind bekannt aus der DE 103 60 587 A1.

Diese Druckschrift offenbart ein Drehmomentübertragungssystem eines Kraftfahrzeugs zwischen einem vorgeschalteten Antriebsaggregat und einem nachgeschalteten Getriebe. Das System umfasst einen hydrodynamischen Drehmomentwandler und eine schlupfgeregelte Überbrückungskupplung.

Der Einsatz hydrodynamischer Drehmomentwandler zur Übertragung eines Drehmomentes von einem Antriebsaggregat zu einem Getriebe ist sei langem bekannt. Insbesondere bei Anfahrvorgängen ist es bekannt, das gesamte Drehmoment über diesen hydraulischen Pfad zu übertragen. Bei höheren Drehzahlen am Getriebeeingang ist jedoch meist die Momentenübertragung über einen rein mechanischen Weg günstiger. Daher sind hydrodynamische Drehmomentwandler typischerweise parallel zu einer Überbrückungskupplung, die beispielsweise als Reibkupplung ausgebildet sein kann, angeordnet. Bei klassischen Anfahrvorgängen wird dann häufig über den Drehmomentwandler bei offener Überbrückungskupplung angefahren und die Überbrückungskupplung bei Erreichen hinreichender Drehzahlen geschlossen, sodass das Moment über den mechanischen Pfad übertragen wird. ,

In der zitierten, gattungsbildenden Druckschrift wird das Problem der aufwendigen Software-Anpassung solcher Systeme an unterschiedliche Fahrzeug- oder Komponententypen beklagt. Zur Lösung wird daher eine strenge Kupplungshierarchie vorgeschlagen, die den mechanischen Pfad stets dem hydraulischen Pfad unterordnet. Aus einem gewünschten Soll-Fahrzustand, der durch eine Reihe von Fahrzustand-Sollwerten definiert ist, wird ein Gesamt-Sollmoment berechnet, dass über das Drehmomentübertragungssystem übertragen werden soll. Weiter werden die über die einzelnen Pfade zu übertragenden Pfad-Sollmomente berechnet, wobei über den hydraulischen Pfad das theoretisch mögliche Maximum an Drehmoment übertragen wird und der mechanische Pfad rein additiv soweit erforderlich zugeschaltet wird.

Insbesondere im Zusammenhang mit modernen Elektroantrieben oder Hybridantrieben haben die Anforderungen an die Momentenverzweigung bei der Übertragung jedoch deutlich an Komplexität gewonnen. Vor dem Hintergrund eines möglichst effizienten Energieeinsatzes kommt es in modernen Fahrzeugen häufig zu einer Änderung des Arbeitspunktes des Antriebsaggregates, um dieses möglichst stets im effizientesten Betriebsmodus laufen zu lassen. Dabei kann es abtriebsseitig des Drehmomentübertragungssystems zu Momentensprüngen kommen, die vom Fahrer des Kraftfahrzeugs als unangenehm und unberechenbar empfunden werden.

Die DE 195 04 935 A1 begegnet diesem Problem durch eine Schlupfregelung der Überbrückungskupplung. Dies ist unter energetischen Aspekten ungünstig.

### Aufgabenstellung

Es ist die Aufgabe der vorliegenden Erfindung, gattungsgemäße Drehmomentübertragungssysteme und deren Betriebsverfahren effizienter zu gestalten.

### Darlegung der Erfindung

Diese Aufgabe wird in Verbindung mit den Merkmalen des Oberbegriffs von Anspruch 1 gelöst durch die weiteren, mittels der Steuereinheit durchgeführten Verfahrensschritte:
- Vergleichen des ermittelten Momentes mit einem vorbestimmten Soll-Gesamtmoment und Berechnen eines entsprechenden Differenzmomentes,
- Ermitteln der aktuellen Ausgangsdrehzahl des Drehmomentwandlers,
- Berechnen einer Soll-Eingangsdrehzahl des Drehmomentwandlers, die erforderlich wäre, um bei der ermittelten Ausgangsdrehzahl das Differenzmoment über den hydraulischen Pfad zu übertragen, und
- Einstellen der Ausgangsdrehzahl des Antriebsaggregates auf die berechnete Eingangsdrehzahl oder einen dieser unter Berücksichtigung zwischengeschalteter Übersetzungselemente entsprechender Wert.

Die Aufgabe wird weiter in Verbindung mit den Merkmalen des Oberbegriffs von Anspruch 10 dadurch gelöst, dass die Steuereinheit weiter
- das ermittelte Moment mit einem vorbestimmten Soll-Gesamtmoment vergleicht und ein entsprechendes Differenzmoment berechnet,
- die aktuelle Ausgangsdrehzahl des Drehmomentwandlers ermittelt,
- eine Soll-Eingangsdrehzahl des Drehmomentwandlers, die erforderlich wäre, um bei der ermittelten Ausgangsdrehzahl das Differenzmoment über den hydraulischen Pfad zu übertragen, berechnet und
- die Ausgangsdrehzahl des Antriebsaggregates auf die berechnete Eingangsdrehzahl oder einen dieser unter Berücksichtigung zwischengeschalteter Übertragungselemente entsprechenden Wert einstellt.

Vorteilhafte Ausführungsformen und Weiterbildungen der Erfindung sind Gegenstand der abhängigen Ansprüche.

Kern der Erfindung ist die Abkehr von der Schlupfsteuerung der Überbrückungskupplung, die durch eine Drehzahlregelung der Eingangsseite des hydrodynamischen Wandlers ersetzt wird.

Ist, beispielsweise während des Anfahrvorgangs mit einem Hybridfahrzeug, ein Wechsel von einem vollständig oder hauptsächlich über den mechanischen Pfad übertragenen Momentenfluss hin zu einem hauptsächlich oder vollständig über den hydraulischen Pfad übertragenen Momentenfluss erforderlich, um beispielsweise das Antriebsaggregat in einem günstigeren Arbeitspunkt arbeiten zu lassen, kann die Überbrückungskupplung im Wesentlichen verfahrensfrei, d.h. ohne Schlupfregelung geöffnet werden. Die sich dabei verringernde Größe des über den mechanischen Zweig übertragenen Drehmomentes wird kontinuierlich ermittelt. Diese Ermittlung kann durch direkte Messung des an der Überbrückungskupplung übertragenen Momentes oder durch eine Berechnung erfolgen. Der bevorzugte Fall der Berechnung setzt die Kenntnis einer Momentenkennlinie voraus, die das jeweils übertragene Moment als Funktion der Kupplungsstellung repräsentiert. Die Kupplungsstellung kann entweder gemessen werden oder ist aufgrund der Ansteuerung, z. B. mit Stell- oder Schrittmotoren bekannt. Das tatsächlich über die Überbrückungskupplung übertragene Moment wird mit einem Soll-Gesamtmoment verglichen. Als Soll-Gesamtmoment ist dasjenige Moment zu verstehen, welches am Eingang der Getriebeanordnung anliegen soll. Dies kann z. B. durch Fahrerwunsch, ausgedrückt beispielsweise durch Gaspedalstellung, oder von einer Steuereinheit bestimmt werden. Man beachte, dass es sich dabei nicht um ein statisches Moment handelt, sondern typischerweise um einen zeitlich variierenden Momentenverlauf. Dieser kann bei besonderen Ausführungsformen durch geeignete Modelle vorgegeben oder extrapoliert werden.

Der Vergleich des von der Überbrückungskupplung übertragenen Momentes mit dem Soll-Gesamtmoment führt zu der Berechnung eines Differenzmomentes. Das Differenzmoment ist dasjenige Moment, welches zusätzlich zu dem von der Überbrückungskupplung übertragenen Moment von dem Drehmomentwandler übertragen werden muss, damit am Getriebeeingang das Soll-Drehmoment als Summe der über den mechanischen und den hydraulischen Pfad übertragenen Teilmomente anliegt.

Im weiteren Verlauf bemüht sich das System, das Differenzmoment auch tatsächlich über den Drehmomentwandler zu übertragen. Wesentlicher Gesichtspunkt ist dabei, das dieses Drehmoment bei der aktuell am Getriebeeingang anliegenden Drehzahl, d.h. im Wesentlichen der aktuellen Ausgangsdrehzahl des Drehmomentwandlers, zu übertragen. Ein typischer Drehmomentwandler hat eine bauartbedingte, passive Übertragungscharakteristik. Diese setzt bei gegebener Ausgangsdrehzahl das übertragene Moment mit einer Eingangsdrehzahl des Wandlers in Beziehung. In Kenntnis dieser Übertragungscharakteristik lässt sich also die bei der aktuellen Ausgangsdrehzahl des Wandlers zur Übertragung des Differenzmomentes erforderliche Eingangsdrehzahl des Wandlers berechnen. Diese Berechnung erfolgt in der Steuereinheit. Zur Umsetzung wird das Antriebsaggregat auf die entsprechende Drehzahl eingestellt.

Ein entsprechendes Verfahren mit den gleichen Ermittlungs-, Berechnungs- und Einstellungsschritten ist auch im umgekehrten Fall des Schließens der Überbrückungskupplung einsetzbar.

Wie erwähnt, ist zur Berechnung der Soll-Eingangsdrehzahl des Drehmomentwandlers die Kenntnis der passiven Übertragungscharakteristik des Wandlers erforderlich. Bei einer Ausführungsform der Erfindung ist vorgesehen, dass die Berechnung auf Basis von gespeicherten, die passive Übertragungscharakteristik des Drehmomentwandlers berücksichtigenden Rechenregeln erfolgt, d.h. die Soll-Eingangsdrehzahl wird kontinuierlich neu unter Zuhilfenahme abgespeicherter Formeln und Algorithmen berechnet. Alternativ oder zusätzlich kann die Berechnung der Soll-Eingangsdrehzahl des Drehmomentwandlers auf Basis eines gespeicherten Kennfeldes erfolgen, d.h. im Wesentlichen aus entsprechenden Tabellen abgelesen werden. Kombinationen beider Verfahren können z. B: eine grobe Berechnung durch Ablesen aus einem groben Kennlinienfeld und eine Feinjustierung durch Extrapolation oder Interpolation umfassen.

Das Antriebsaggregat kann einen oder mehrere Elektromotoren und/oder eine oder mehrere Verbrennungsmaschinen umfassen. Im Fall der Verbrennungsmaschine ist darauf zu achten, dass diese im eingeschalteten Zustand stets eine Mindestdrehzahl benötigt. Dies kann dadurch berücksichtigt werden, dass die Durchführung des erfindungsgemäßen Verfahrens unter der Randbedingung einer Mindestausgangsdrehzahl der Verbrennungsmaschine erfolgt. Im Fall eines Hybridantriebs kann dies bedeuten, dass die Verbrennungsmaschine, sobald die Gefahr droht, die Mindestausgangsdrehzahl zu unterschreiten, abgeschaltet wird. Alternativ kann in einer solchen Situation auch eine zusätzliche Schlupfregelung der Überbrückungskupplung einsetzen.

### Kurze Beschreibung der Zeichnungen:

### Es zeigen:

- Fig. 1: eine schematische Darstellung des Aufbaus eines Drehmomentübertragungssystems.
- Fig. 2: eine schematische Darstellung der Momenten- und Drehzahlverläufe im Rahmen des erfindungsgemäßen Verfahrens.

### Beschreibung bevorzugter Ausführungsformen

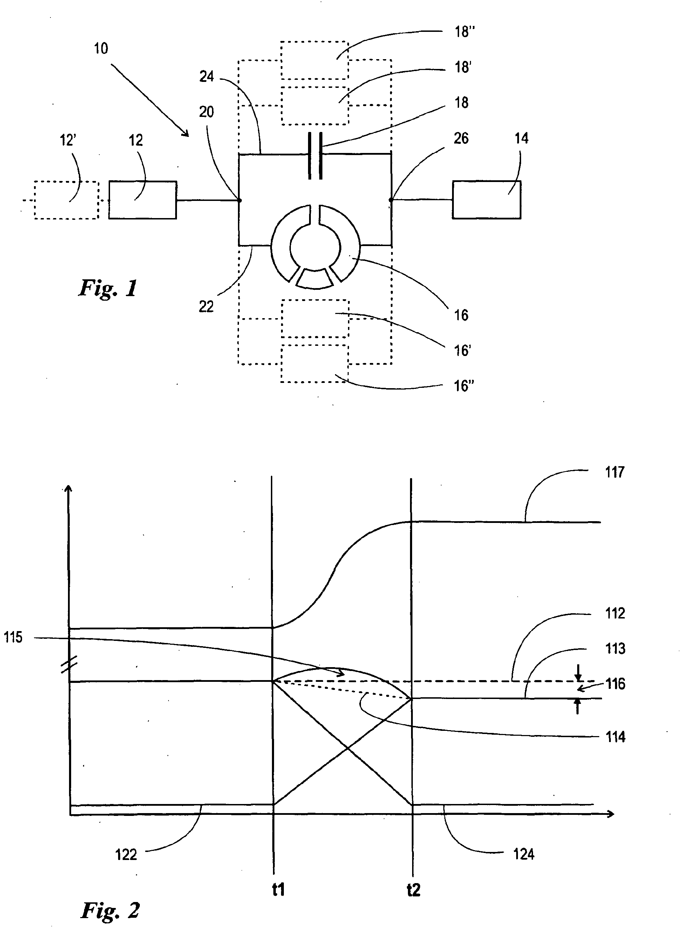

Figur 1 zeigt in stark schematisierter Darstellung ein Drehmomentübertragungssystem 10, welches zur Anwendung der vorliegenden Erfindung geeignet ist. Das Drehmomentübertragungssystem 10 verbindet ein Antriebsaggregat 12 mit einem nachgeschalteten Getriebe 14 eines Kraftfahrzeugs. Das Getriebe 14 ist typischerweise mit weiteren Komponenten eines nicht dargestellten Antriebsstrangs verbunden. Das dargestellte Momentenübertragungssystem 10 umfasst einen hydrodynamischen Drehmomentwandler 16 und eine hierzu parallel geschaltete Überbrückungskupplung 18, die im vorliegenden Fall als Reibkupplung ausgebildet ist. An einem vorderen Verzweigungspunkt 20, der eine Schnittstelle zwischen dem Momentenübertragungssystem 10 und dem Antriebsaggregat 12 darstellt, verzweigt sich der Momentenfluss in einen hydraulischen Pfad 22, der über den hydrodynamischen Wandler 16 führt, und einen mechanischen Pfad 24, der über die Überbrückungskupplung 18 führt. In einem hinteren Verzweigungspunkt 26, der eine Schnittstelle zwischen dem Momentenübertragungssystem 10 und dem Getriebe 14 darstellt, werden die Pfade 22, 24 wieder zusammengeführt. Je nach Einstellung des Systems kann das von dem Antriebsaggregat 12 gelieferte Gesamtmoment vollständig über den hydraulischen Pfad 22, vollständig über den mechanischen Pfad 24 oder teilweise über den hydraulischen Pfad 22 und teilweise über den mechanischen Pfad 24 fließen.

In Figur 1 sind in gestrichelter Darstellung ein weiteres Antriebsaggregat 12' und weitere Momentenübertragungselemente 16', 16" bzw. 18', 18" gezeigt. Hiermit soll angedeutet werden, dass die vorliegende Erfindung nicht auf Systeme mit einem Motor 12, einem hydrodynamischen Wandler 16 und einer Überbrückungskupplung 18 beschränkt ist. Vielmehr ist sie auch auf erweiterte Systeme mit grundsätzlich einer beliebigen Anzahl von Motoren und einer beliebigen Anzahl von Momentenübertragungselementen anwendbar.

Figur 2 zeigt rein beispielhaft und stark schematisiert den Verlauf von Momenten und Drehzahlen in einer Anordnung gemäß Figur 1 bei Anwendung des erfindungsgemäßen Verfahrens. Der Graph 112 zeigt das an den Abtriebsstrang abgegebene Gesamtmoment. Im dargestellten Beispiel soll das Gesamtmoment 112 gemäß Fahrerwunsch oder gemäß Vorgabe einer übergeordneten Steuereinrichtung konstant gehalten werden. Der Graph 113 zeigt das vom Antriebsaggregat erzeugte Antriebsmoment. Der Graph 122 zeigt das über den hydraulischen Pfad 22 übertragene Teilmoment. Der Graph 124 zeigt das über den mechanischen Pfad übertragene Teilmoment.

Der Graph 116 zeigt die eingangsseitig des Drehmomentenwandlers 16 anliegende Drehzahl. Diese entspricht bei einer Anordnung gemäß Figur 1 der Ausgangsdrehzahl des Antriebsaggregates 12. Bei anderen Ausführungsformen ist grundsätzlich denkbar, dass zwischen dem Ausgang des Antriebsaggregates 12 und dem Eingang des Drehmomentenwandlers 16 eine Übersetzungsstufe angeordnet ist, die bei der Realisierung des erfindungsgemäßen Verfahrens zu berücksichtigen ist. Das wesentliche Konzept der Erfindung ist für den Fachmann jedoch leichter anhand der in den Figuren dargestellten, vereinfachten Fälle erkennbar.

Figur 2 spiegelt ein Szenario wieder, bei dem zunächst das Motormoment 113 vollständig über den mechanischen Pfad 24 übertragen wird. Mit anderen Worten erfolgt der Antrieb bei geschlossener Kupplung 18. Das übertragene Gesamtmoment 112 ist anfangs somit gleich dem über den mechanischen Pfad 24 übertragenen Teilmoment 124 und gleich dem Motormoment 113. Das über den hydraulischen Pfad übertragene Teilmoment 122 ist im Wesentlichen Null. Das Antriebsaggregat 12 arbeitet in dieser Situation auf einem vergleichsweise niedrigen Drehzahlniveau 116.

Handelt es sich bei dem Antriebsaggregat 12 beispielsweise um einen Elektromotor kann es sein, dass zur Aufbringung eines hohen Gesamtmomentes 112 bei niedriger Drehzahl 116 ungünstig hohe Ströme fließen müssen. Handelt es sich bei dem Antriebaggregat 12 hingegen um eine Verbrennungsmaschine kann es z. B. sein, dass die anliegende, niedrige Drehzahl 116 nicht ausreicht, um das geforderte Gesamtmoment 112 zu erbringen oder dass die Verbrennungsmaschine in einem unter Verbrauchsaspekten betrachtet ungünstigen Arbeitspunkt läuft. Aus diesen oder anderen Gründen kann von einer nicht näher dargestellten Steuereinheit die Entscheidung getroffen werden, den aktuellen Arbeitspunkt des Antriebsaggregates 12 zu einer höheren Drehzahl hin zu verschieben. Dies soll jedoch ohne Komforteinbußen für den Fahrer und insbesondere ohne Momenten- oder Drehzahlsprünge am Eingang des Getriebes 14 erfolgen.

Zum Zeitpunkt t1 wird daher unter Anwendung des erfindungsgemäßen Verfahrens ein Arbeitspunktwechsel eingeleitet, der im Zeitpunkt t2 abgeschlossen ist. Während des Arbeitspunktwechsels wird die Überbrückungskupplung 18 geöffnet. Die Öffnung erfolgt im Wesentlichen verfahrensfrei, d.h. durch direkte Ansteuerung und ohne Regelmechanismen, wie beispielsweise eine Schlupfregelung. Das Öffnen der Überbrückungskupplung 18 führt zu einem Abfall des über den mechanischen Pfad 24 übertragenen Teilmomentes 124 bis auf Null im vollständig geöffneten Zustand der Überbrückungskupplung 18. Man beachte, dass eine vollständige Öffnung der Kupplung 18 nicht zwingend erforderlich ist, sonder hier lediglich der Illustration halber angenommen wird. Dieser Abfall des Teilmomentes 124 wird von der Steuereinheit registriert. Dies erfolgt günstigerweise anhand einer bekannten und im Speicher der Steuereinheit hinterlegten Momentenkennlinie, über die das von der Kupplungsstellung abhängige maximal übertragbare Moment bekannt ist. Weiter ist der Steuereinheit das geforderte Gesamtmoment 112 bekannt. Zu dessen Bestimmung können beliebige Verfahren eingesetzt werden, die z. B. Interpretation einer Gaspedalstellung als Fahrerwunsch, Vorgaben einer automatischen Steuerung mit oder ohne Interpolationen oder Extrapolationen des zeitlichen Momentenverlaufs umfassen können. Aus dem geforderten Gesamtmoment 112 und dem während des Übergangs abfallenden mechanisch übertragenen Teilmomentes 124 ermittelt die Steuereinheit ein Differenzmoment. Das Differenzmoment muss zur Bereitstellung des Gesamtmomentes 112 zusätzlich zu dem über den mechanischen Pfad 24 übertragenen Teilmoment 124 über den hydraulischen Pfad 22 übertragen werden und entspricht somit dem über den Drehmomentwandler 16 übertragenen Teilmoment 122, das während des Übergangs zwischen t1 und t2 entsprechend angehoben werden muss.

Die Anhebung des über den hydraulischen Zweig 22 übertragenen Teilmomentes 122 erfolgt unter Drehzahlregelung des Antriebsaggregates 12. Hierzu muss die passive Charakteristik des Drehmomentwandlers 16, beispielsweise in Form eines gespeicherten Kennfeldes, der Steuereinheit bekannt sein. Diese kann somit errechnen, welche Eingangsdrehzahl am Momentenwandler 16 anliegen muss, damit dieser an seinem Ausgang bei der aktuellen Ausgangsdrehzahl das geforderte Moment liefert. Diese errechnete Drehzahl wird dann am Antriebsaggregat eingestellt, wobei ggf. zwischengeschaltete Übersetzungsstufen berücksichtigt werden. Dabei wird die Wandlerüberhöhung 117 berücksichtigt, sodass nach t2 das Motormoment 113 niedriger ist als vor t1. Weiter wird während des Übergangs zwischen t1 und t2 die Zusammensetzung des Momentes aus statischem Anteil 114 und dynamischem Anteil 115 berücksichtigt.

Im Ergebnis bleibt bei der dargestellten Ausführungsform der Gesamtmomentenverlauf 112 am Abtrieb konstant, während die Momentenübertragung vom mechanischen Zweig 24 auf den hydraulischen Zweig 22 übergeht und zwar unter Drehzahlregelung des Antriebsaggregates 12. Die Kupplung 18 kann im Wesentlichen verfahrensfrei geöffnet werden.

Natürlich stellen die in der speziellen Beschreibung diskutierten und in den Zeichnungen gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben. Insbesondere kann die Bauart und Anzahl der Momentenübertragungselemente 16, 16', 16", ... und 18, 18', 18", ... sowie die Anzahl und Bauart der Antriebsaggregate 12, 12', ... vom Fachmann in Ansehung des jeweiligen Einzelfalls frei gewählt werden.

### Bezugszeichenliste

- 10: Drehmomentenübertragungssystem 12
- 12: Antriebsaggregat
- 12': Antriebsaggregat
- 14: Getriebe
- 16: Hydraulischer Drehmomentwandler
- 16': weiteres Momentenübertragungselement
- 16": weiteres Drehmomentübertragungselement
- 18: Überbrückungskupplung
- 18': weiteres Drehmomentübertragungselement
- 18": weiteres Drehmomentübertragungselement
- 20: vorderer Verzweigungspunkt
- 22: hydraulischer Pfad
- 24: mechanischer Pfad
- 26: hinterer Verzweigungspunkt
- 112: Graph des Gesamtdrehmomentes
- 113: Motormoment
- 114: statischer Anteil von 113
- 115: dynamischer Anteil von 113
- 116: Graph der Drehzahl am Eingang von 16
- 117: Wandlerüberhöhung
- 122: über 22 übertragendes Teilmoment
- 124: über 24 übertragendes Teilmoment

## Patentansprüche

1. Verfahren zum Betrieb eines Drehmomentübertragungssystems (10),
- das eingangsseitig mit einer Abtriebswelle eines Antriebsaggregates (12) und ausgangsseitig mit einer Eingangswelle einer Getriebeanordnung (19) gekoppelt ist, sodass ein Momentenfluss von dem Antriebsaggregat (12) zu der Getriebeanordnung (14) über das Drehmomentübertragungssystem (10) verläuft, und
- das umfasst:
- einen hydrodynamischen Drehmomentwandler (16), über den ein hydraulischer Pfad (22) des Momentenflusses verläuft,
- eine funktional parallel zu dem Drehmomentwandler (16) angeordnete Überbrückungskupplung (18), über die ein mechanischer Pfad (24) des Momentenflusses verläuft, und
- eine Steuereinheit, die eine Verteilung des Momentenflusses auf den hydraulischen und den mechanischen Pfad (22; 24) derart steuert, dass sich an der Eingangswelle der Getriebeanordnung (14) ein vorbestimmter Gesamtmomentenverlauf (112) einstellt,
mit dem folgenden, mittels der Steuereinheit durchgeführten Verfahrensschritt:
- Ermitteln des aktuell von der Überbrückungskupplung (18) übertragenen Momentes (124),
**gekennzeichnet durch**
die weiteren, mittels der Steuereinheit durchgeführten Verfahrensschritte:
- Vergleichen des ermittelten Momentes mit einem vorbestimmten Soll-Gesamtmoment (112) und Berechnen eines entsprechenden Differenzmomentes (122),
- Ermitteln der aktuellen Ausgangsdrehzahl des Drehmomentwandlers (16),
- Berechnen einer Soll-Eingangsdrehzahl (116) des Drehmomentwandlers(16), die erforderlich wäre, um bei der ermittelten Ausgangsdrehzahl das Differenzmoment (122) über den hydraulischen Pfad (22) zu übertragen, und
- Einstellen der Ausgangsdrehzahl des Antriebsaggregates (12) auf die berechnete Eingangsdrehzahl oder einen dieser unter Berücksichtigung zwischengeschalteter Übersetzungselemente entsprechender Wert.

2. Verfahren nach Anspruch 1, **dadurch gekennzeichnet, dass** das von der Überbrückungskupplung (18) aktuell übertragene Moment (124) aus einer aktuellen Kupplungsstellung in Zusammenhang mit einer gespeicherten Momentenkennlinie ermittelt wird.

3. Verfahren nach Anspruch 1, **dadurch gekennzeichnet, dass** das von der Überbrückungskupplung (18) aktuell übertragene Moment (124) mittels einer Momentenmesseinrichtung direkt gemessen wird.

4. Verfahren nach einem der vorangehenden Ansprüche, **dadurch gekennzeichnet, dass** die Berechnung der Soll-Eingangsdrehzahl (116) des Drehmomentwandlers (16) auf Basis von gespeicherten, die passive Übertragungscharakteristik des Drehmomentwandlers berücksichtigenden Rechenregeln erfolgt.

5. Verfahren nach einem der Ansprüche 1 bis 3, **dadurch gekennzeichnet, dass** die Berechnung der Soll-Eingangsdrehzahl (116) des Drehmomentwandlers (16) auf Basis einer gespeicherten Kennfeldes erfolgt.

6. Verfahren nach einem der vorangehenden Ansprüche, **dadurch gekennzeichnet, dass** das Antriebsaggregat (12) einen Elektromotor umfasst.

7. Verfahren nach einem der vorangehenden Ansprüche; **dadurch gekennzeichnet, dass** das Antriebsaggregat (12) einen Verbrennungsmotor umfasst.

8. Verfahren nach Anspruch 7 **dadurch gekennzeichnet, dass** seine Durchführung unter der Randbedingung einer Mindestausgangsdrehzahl der Verbrennungsmaschine erfolgt.

9. Verfahren nach Anspruch 8 **dadurch gekennzeichnet, dass** im Fall, dass die Randbedingung nicht eingehalten werden kann, eine Schlupfregelung der Überbrückungskupplung aktiviert wird.

10. Drehmomentübertragungssystem,
- das eingangsseitig mit einer Abtriebswelle eines Antriebsaggregates (12) und ausgangsseitig mit einer Eingangswelle einer Getriebeanordnung (14) gekoppelt ist, sodass ein Momentenfluss von dem Antriebsaggregat (12) zu der Getriebeanordnung (14) über das Drehmomentübertragungssystem verläuft, und
- das umfasst:
- einen hydrodynamischen Drehmomentwandler (16), über den ein hydraulischer Pfad (22) des Momentenflusses verläuft,
- eine funktional parallel zu dem Drehmomentwandler (16) angeordnete Überbrückungskupplung (18), über die ein mechanischer Pfad (24) des Momentenflusses verläuft, und
- eine Steuereinheit, die eine Verteilung des Momentenflusses auf den hydraulischen und den mechanischen Pfad (22; 24) derart steuert, dass sich an der Eingangswelle der Getriebeanordnung (14) ein vorbestimmter Gesamtmomentenverlauf (112) einstellt,
wobei die Steuereinheit
- das aktuell von der Überbrückungskupplung (18) übertragenes Moment (124) ermittelt, **dadurch gekennzeichnet,**
**dass** die Steuereinheit weiter
- das ermittelte Moment (124) mit einem vorbestimmten Soll-Gesamtmoment (112) vergleicht und ein entsprechendes Differenzmoment (122) berechnet,
- die aktuelle Ausgangsdrehzahl des Drehmomentwandlers (16) ermittelt,
- eine Soll-Eingangsdrehzahl (116) des Drehmomentwandlers (16), die erforderlich wäre, um bei der ermittelten Ausgangsdrehzahl das Differenzmoment (122) über den hydraulischen Pfad (22) zu übertragen, berechnet und
- die Ausgangsdrehzahl des Antriebsaggregates (12) auf die berechnete Eingangsdrehzahl oder einen dieser unter Berücksichtigung zwischengeschalteter Übertragungselemente entsprechenden Wert einstellt.

## Claims

1. Method for operating a torque-transmitting system (10),
- which is coupled on the input side to an output shaft of a drive unit (12) and on the output side to an input shaft of a transmission arrangement (14), so that a torque flux runs from the drive unit (12) to the transmission arrangement (14) via the torque-transmitting system (10), and
- which comprises:
- a hydrodynamic torque converter (16) via which a hydraulic path (22) of the torque flux runs,
- a lockup clutch (18) which is arranged functionally parallel to the torque converter (16) and via which a mechanical path (24) of the torque flux runs, and
- a control unit which controls distribution of the torque flux between the hydraulic path (22) and the mechanical path (24) in such a way that a predetermined overall torque profile (112) is set at the input shaft of the transmission arrangement (14),
having the following method step which is carried out by means of the control unit:
- determination of the torque (124) which is currently transmitted by the lockup clutch (18),
**characterized by**
the further method steps which are carried out by means of the control unit:
- comparison of the determined torque with a predetermined setpoint overall torque (112) and calculation of a corresponding difference torque (122),
- determination of the current output speed of the torque converter (16),
- calculation of a setpoint input speed (116) of the torque converter (16) which would be necessary to transmit the difference torque (122) via the hydraulic path (22) when the output speed is determined, and
- setting of the output speed of the drive unit (12) to the calculated input speed or a value which corresponds thereto taking into account intermediately connected transmission elements.

2. Method according to Claim 1, **characterized in that** the torque (124) which is currently transmitted by the lockup clutch (18) is determined from a current clutch setting in conjunction with a stored torque characteristic curve.

3. Method according to Claim 1, **characterized in that** the torque (124) which is currently transmitted by the lockup clutch (18) is measured directly by means of a torque-measuring device.

4. Method according to one of the preceding claims, **characterized in that** the setpoint input speed (116) of the torque converter (16) is calculated on the basis of stored computational rules which take into account the passive transmission characteristic of the torque converter.

5. Method according to one of Claims 1 to 3, **characterized in that** the setpoint input speed (116) of the torque converter (16) is calculated on the basis of a stored characteristic diagram.

6. Method according to one of the preceding claims, **characterized in that** the drive unit (12) comprises an electric engine.

7. Method according to one of the preceding claims, **characterized in that** the drive unit (12) comprises an internal combustion engine.

8. Method according to Claim 7, **characterized in that** it is carried out under the peripheral condition of a minimum output speed of the internal combustion engine.

9. Method according to Claim 8, **characterized in that** if the peripheral condition cannot be maintained, slip control of the lockup clutch is activated.

10. Torque-transmitting system,
- which is coupled on the input side to a drive shaft of a drive unit (12) and on the output side to an input shaft of a transmission arrangement (14), so that a torque flux runs from the drive unit (12) to the transmission arrangement (14) via the torque-transmitting system, and
- which comprises:
- a hydrodynamic torque converter (16) via which a hydraulic path (22) of the torque flux runs,
- a lockup clutch (18) which is arranged functionally parallel to the torque converter (16) and via which a mechanical path (24) of the torque flux runs, and
- a control unit which controls distribution of the torque flux between the hydraulic path (22) and the mechanical path (24) in such a way that a predetermined overall torque profile (112) is set at the input shaft of the transmission arrangement (14),
wherein the control unit
- determines the torque (124) which is currently transmitted by the lockup clutch (18), **characterized**
**in that** the control unit furthermore
- compares the determined torque (124) with a predetermined setpoint overall torque (112) and calculates a corresponding difference torque (122),
- determines the current output speed of the torque converter (16),
- calculates a setpoint input speed (116) of the torque converter (16) which would be necessary to transmit the difference torque (122) via the hydraulic path (22) when the output speed is being determined, and
- sets the output speed of the drive unit (12) to the calculated input speed or a value which corresponds thereto taking into account intermediately connected transmission elements.

## Revendications

1. Procédé pour faire fonctionner un système de transmission de couple (10),
- qui est couplé côté entrée avec un arbre de sortie d'un ensemble d'entraînement (12) et côté sortie avec un arbre d'entrée d'un dispositif d'engrenage (14), de sorte qu'un flux de couple passe de l'ensemble d'entraînement (12) au dispositif d'engrenage (14) via le système de transmission de couple (10), et
- qui comprend :
- un convertisseur de couple (16) hydrodynamique, par lequel passe un chemin hydraulique (22) du flux de couple,
- un accouplement de shuntage (18) disposé au plan fonctionnel parallèlement au convertisseur de couple (16), par lequel passe un chemin mécanique (24) du flux de couple, et
- une unité de commande, qui commande une répartition du flux de couple sur le chemin hydraulique et le chemin mécanique (22 ; 24), de telle sorte qu'une courbe de couple global (112) prédéfinie s'établit sur l'arbre d'entrée du dispositif d'engrenage (14),
avec l'étape de procédé suivante, mise en oeuvre au moyen de l'unité de commande :
- détermination du couple (124) transmis actuellement par l'accouplement de shuntage (18),
**caractérisé par**
les autres étapes de procédé mises en oeuvre au moyen de l'unité de commande :
- comparaison du couple déterminé avec un couple global de consigne (112) prédéfini et calcul d'un couple différentiel (122) correspondant,
- détermination du régime de sortie actuel du convertisseur de couple (16),
- calcul d'un régime d'entrée de consigne (116) du convertisseur de couple (16), qui serait nécessaire pour transmettre le couple différentiel (122) par l'intermédiaire du chemin hydraulique (22) avec le régime de sortie déterminé, et
- réglage du régime de sortie de l'ensemble d'entraînement (12) sur le régime d'entrée calculé ou sur une valeur correspondant à ce régime compte tenu d'éléments de transmission intercalés.

2. Procédé selon la revendication 1, **caractérisé en ce que** le couple (124) transmis actuellement par l'accouplement de shuntage (18) est déterminé à partir d'une position d'accouplement actuelle en rapport avec une courbe caractéristique de couple mémorisée.

3. Procédé selon la revendication 1, **caractérisé en ce que** le couple (124) transmis actuellement par l'accouplement de shuntage (18) est mesuré directement au moyen d'un dispositif de mesure de couple.

4. Procédé selon l'une des revendications précédentes, **caractérisé en ce que** le calcul du régime d'entrée de consigne (116) du convertisseur de couple (16) s'effectue sur la base de règles de calcul mémorisées, prenant en compte la caractéristique de transmission passive du convertisseur de couple.

5. Procédé selon l'une des revendications 1 à 3, **caractérisé en ce que** le calcul du régime d'entrée de consigne (116) du convertisseur de couple (16). s'effectue sur la base d'un champ caractéristique mémorisé.

6. Procédé selon l'une des revendications précédentes, **caractérisé en ce que** l'ensemble d'entraînement (12) comprend un moteur électrique.

7. Procédé selon l'une des revendications précédentes, **caractérisé en ce que** l'ensemble d'entraînement (12) comprend un moteur à combustion.

8. Procédé selon la revendication 7, **caractérisé en ce que** sa mise en oeuvre s'effectue avec la condition limite d'un régime de sortie minimum du moteur à combustion.

9. Procédé selon la revendication 8, **caractérisé en ce que**, dans le cas où la condition limite ne peut pas être respectée, un réglage de glissement de l'accouplement de shuntage est activé.

10. Système de transmission de couple,
- qui est couplé côté entrée avec un arbre de sortie d'un ensemble d'entraînement (12) et côté sortie avec un arbre d'entrée d'un dispositif d'engrenage (14), de sorte qu'un flux de couple passe de l'ensemble d'entraînement (12) au dispositif d'engrenage (14) via le système de transmission de couple, et
- qui comprend :
- un convertisseur de couple (16) hydrodynamique, par lequel passe un chemin hydraulique (22) du flux de couple,
- un accouplement de shuntage (18) disposé au plan fonctionnel parallèlement au convertisseur de couple (16), par lequel passe un chemin mécanique (24) du flux de couple, et
- une unité de commande, qui commande une répartition du flux de couple sur le chemin hydraulique et le chemin mécanique (22 ; 24), de telle sorte qu'une courbe de couple global (112) prédéfinie s'établit sur l'arbre d'entrée du dispositif d'engrenage (14),
l'unité de commande :
- déterminant le couple (124) transmis actuellement par l'accouplement de shuntage (18),
**caractérisé**
**en ce que** l'unité de commandé
- compare le couple (124) déterminé avec un couple global de consigne (112) prédéfini et calcule un couple différentiel (122) correspondant,
- détermine le régime de sortie actuel du convertisseur de couple (16),
- calcule un régime d'entrée de consigne (116) du convertisseur de couple (16), qui serait nécessaire pour transmettre le couple différentiel (122), avec le régime de sortie déterminé, par l'intermédiaire du chemin hydraulique (22) et
- règle le régime de sortie de l'ensemble d'entraînement (12) sur le régime d'entrée calculé ou sur une valeur correspondant à ce régime compte tenu d'éléments de transmission intercalés.
